Europäisches Patentamt

European Patent Office

Office européen des brevets

(19)

(11) EP 1 681 273 A1

(12) **EUROPEAN PATENT APPLICATION**

(43) Date of publication:
19.07.2006 Bulletin 2006/29

(51) Int Cl.:
*C02F 5/10* (2006.01)      *C11D 17/00* (2006.01)
*C02F 1/68* (2006.01)      *C02F 5/14* (2006.01)

(21) Application number: 06004362.7

(22) Date of filing: 27.11.2002

(84) Designated Contracting States:
AT BE BG CH CY CZ DE DK EE ES FI FR GB GR
IE IT LI LU MC NL PT SE SK TR

(30) Priority: 27.11.2001 GB 0128321

(62) Document number(s) of the earlier application(s) in
accordance with Art. 76 EPC:
02781405.2 / 1 448 483

(71) Applicant: Reckitt Benckiser N.V.
2132 NZ Hoofddorp (NL)

(72) Inventors:
• Bosco, Manuela
  Mira
  VE 30034 (IT)

• Casonati, Roberto
  Mira
  VE 30034 (IT)

(74) Representative: Bowers, Craig Malcolm et al
Reckitt Benckiser Plc
Legal Department - Patents Group
Dansom Lane
Hull
HU8 7DS (GB)

Remarks:
This application was filed on 03 - 03 - 2006 as a
divisional application to the application mentioned
under INID code 62.

(54) **Water-softening tablet**

(57) This invention relates to a method of softening water and/or in which the deposition of hard water scale is inhibited. The invention relates in particular to such a method carried out in a domestic environment, in particular in ware-washing machines. The invention also relates to compressed water-softening compositions for such methods in which at least one water-softening ingredients are unevenly distributed between at least two regions of the compressed water-softening composition.

EP 1 681 273 A1

**Description**

This invention relates to a method of softening water and/or in which the deposition of hard water scale is inhibited. The invention relates in particular to such a method carried out in a domestic environment, in particular in ware-washing machines. The invention also relates to compressed water-softening compositions for such methods in which at least one water-softening ingredients are unevenly distributed between at least two regions.

It is well known that certain metal compounds, notably calcium compounds, when present in water, have a significant effect on the properties of the water. For example, "hard" water containing a significant loading of soluble calcium and magnesium compounds may require a large amount of soap or detergent in order to form a lather. Scale deposits can readily form from such water, for example on heating or pH change or evaporation.
These can be encrustations, or watermarks left on evaporation of water droplets from, especially, a shiny surface.

There have been many proposals for removal of metal ions from aqueous solutions. In the industrial context proposals have included filter beds and polymeric filters for capturing heavy metal ions from an aqueous solution flowing within a passageway. Examples are given in EP992238A and GB20869564A. In the domestic context chelating compositions can be added to an aqueous washing solution and these can capture metal ions, such as calcium ions. Examples of chelating compositions are given in EP892040A.

Increasingly popular is the delivery of cleaning and water-softening compositions as compressed compositions, typically a tablet. These are convenient providing a unit dosage which is easily handled. Difficulties arise in the production of such compressed compositions in balancing the needs that the compressed composition is suitably hard and non-friable under transportation conditions but yet is not so compacted that it cannot easily disintegrate. Suitable levels of "hardness" are between 150 N and 250 N (the test conditions being set out in the Example section). Suitable levels of "friability" are between 2% and 9% (the test conditions being set out in the Example section). Suitable "disintegration" times are between 5 seconds and 180 seconds, when place in 11 of gently stirred water.

Multi-region compressed compositions are now of interest in being able to provide such advantages as differential release of actives, or delayed release of one region. Developing multi-region compressed compositions is time consuming and expensive due to ingredients reacting to the same physical conditions in different ways, such as moisture or temperature fluctuations. This is may lead to problems at the interface between the regions and the need to prevent separation, which can be caused, for example, by differential expansion. Therefore there is a need to balance the physical properties between the regions even where the composition in each region may be different. To aid ease of development the starting point is usually to start by keeping the compositions between the regions as similar as possible.

A particular problem found with producing such a multi-region product is that the water-softening ingredients are generally highly crystalline and are not easily bound into a compressed formulation, such as citric acid and their salts thereof, and silicates.

We have found that for certain common actives in water-softening compositions the distribution of the active ingredients between two regions in mutual contact with each other is important. In particular water-softening polymers, being a homo or co polymer of the following monomeric units or a salt thereof; an acrylic acid, a maleic acid, a sulfonic acid or a phosphonic acid.

Therefore we present as a feature of the invention a compressed water-softening composition having at least two regions comprising at least one water-softening active, preferably a homo or co polymer of the following monomeric units or a salt thereof; an acrylic acid, a maleic acid, a sulfonic acid or a phosphonic acid wherein the weight excess of the polymer in at least one region is at least 5%, ideally greater than 7%, 10%, 12%, 20%, 50%, 75% or 95% greater than in a second region.

Additional water-softening actives may also be present as described below. A preferred active is citric acid or its salt, ideally the sodium salt. We have also found that the distribution of citric acid, or a salt thereof, between the regions of the compressed formulation affect the values discussed above. A preferred distribution is the weight excess of citric acid or its salt in at least one region is at least 5%w/w, ideally greater than 7%, 10%, 12%, 20%, 50%, 75% or 95% greater than in a second region. Preferably we have found that the distribution of polymer is opposite to that of the citric acid or salt thereof, i.e. the concentration of the citric acid, or salt thereof, should be lower in the region with the higher polymer concentration and *vice versa.*

Additional preferred actives can be a silicate or any one of those described below as Ion exchange agents. A preferred distribution is the weight excess of silicate or other Ion exchange agent in at least one region is at least 5%w/w, ideally greater than 7%, 10%, 12%, 20%, 50%, 75% or 95% greater than in a second region. Preferably we have found that the distribution of polymer and/or citric acid, or a salt thereof, is the same as that of the silicate, i.e. the concentration of the silicate should be higher in the region with the highest concentration of polymer and/or citric acid, or salt thereof.

There are three main types of method of action for water softening actives, described below.

> 1) Ion exchange agents - such agents include alkali metal (preferably sodium) aluminosilicates either crystalline, amorphous or a mixture of the two. Such aluminosilicates generally have a calcium ion exchange capacity of at least 50 mg CaO per gram of aluminosilicate, comply with a general formula:

$$0.8\text{-}1.5\ Na_2O\ .\ 0.8\text{-}6\ SiO_2$$

and incorporate some water. Preferred sodium aluminosilicates within the above formula contain 1.5-3.0 $SiO_2$ units. Both amorphous and crystalline aluminosilicates can be prepared by reaction between sodium silicate and sodium aluminate, as amply described in the literature.

Suitable crystalline sodium aluminosilicate ionexchange detergency builders are described, for example, in GB 1429143 (Procter & Gamble). The preferred sodium aluminosilicates of this type are the well known commercially available zeolites A and X, and mixtures thereof. Also of interest is zeolite P described in EP 384070 (Unilever). Another class of compounds are the layered sodium silicate builders, such as are disclosed in US-A-4464839 and US-A-4820439 and also referred to in EP-A-551375.

These materials are defined in US-A-4820439 as being crystalline layered, sodium silicate of the general formula

$$NaMSi_xO_{2x+1}\ .\ YH_2O$$

where
 M denotes sodium or hydrogen,
x is from 1.9 to 4 and y is from 0 to 20.

Quoted literature references describing the preparation of such materials include Glastechn. Ber. 37,194-200 (1964), Zeitschrift für Kristallogr. 129, 396-404 (1969), Bull. Soc. Franc. Min. Crist., 95, 371-382 (1972) and Amer. Mineral, 62, 763-771 (1977). These materials also function to remove calcium and magnesium ions from water, also covered are salts of zinc which have also been shown to be effective water softening agents.

2) Ion capture agents - agents which prevent metal ions from forming insoluble salts or reacting with surfactants, such as polyphosphate, monomeric polycarbonates, such as citric acid or salts thereof, EDTA, algins, alginates.

3) Anti-nucleating agents - agents which prevent seed crystal growth, such as polycarbonate polymers, such as polyacrylates, acrylic/maleic copolymers, and acrylic phosphonates, and sulfonates.

The compositions may be used in ware washing using a machine or a manual method. The compositions may also be used to soften water in other cleaning methods such as hard surfaces, for example using a hand-cloth or mop, and an open vessel, for example a bucket or bowl. Thus, the cleaning method could be a method of cleaning a hard surface, for example a window, a tiled surface, shower screen, dirty tableware and kitchenware, a sanitary article, for example a bath, shower screen, lavatory, wash basin or sink, a car or a kitchen worktop.

The invention will now be described, by way of embodiment, with reference to the following Examples.

### Examples

### Hardness Test

Using a dynamometer with a test piston diameter of 8 mm and a piston speed 30 mm per minute (a machine such as the ERWEKA tablet hardness tester THB 30 may be used) the maximum hardness of the tablet just prior to breakage is recorded for 4 tablets in the same orientation and averaged.

### Friability Test

Ten tablets are weighed and placed into a square plastic sample holder of approximate dimensions 110×110mm square by 170mm long. The sample holder is rotated horizontally along it length at 50 rpm for 1 minute. The tablets are weighed again and the amount of material loss expressed as percentage

$$\% \text{ friability index } = \frac{W_0 - W_1}{W_0} \times 100$$

where:
$w_0$ = initial weight

$W_1$ = weight of the tablets after one minute of test at 50 rpm

| Raw Materials | Region1 | Region2 |
|---|---|---|
| Polymer | 28.000 | 28.000 |
| Citrate | 57.800 | 54.690 |
| Binder /Disintegrants | 14.200 | 15.294 |
| Silicate | | 2.000 |
| Dye | | 0.016 |
| TOTAL | 100 | 100 |

| Raw Materials | Region1 | Region2 |
|---|---|---|
| Polymer | 26.250 | 35.000 |
| Citrate | 59.550 | 47.690 |
| Binder/ Disintegrant | 14.200 | 15.294 |
| Silicate | | 2.000 |
| Dye | | 0.016 |
| TOTAL | 100 | 100 |

**Claims**

1. A compressed water-softening composition having at least two regions comprising at least one water-softening active selected from a homo or co polymer of the following monomeric units or a salt thereof; an acrylic acid, a maleic acid, a sulfonic acid or a phosphonic acid wherein, the weight excess of the water-softening active in a first region is at least 5% greater than in a second region.

2. A compressed water-softening composition as claimed in claim 1, wherein also present is citric acid or its salt.

3. A compressed water-softening composition as claimed in claim 2, wherein the citric acid or its salt is present in a weight excess in the second region of at least 5% greater than in the first region.

4. A compressed water-softening composition as claimed in any claim from claim 1 to claim 3, wherein also present is a silicate.

5. A compressed water-softening composition as claimed in claim 4, wherein the silicate is present in a weight excess in the first region of at least 5% greater than in the second region.

European Patent
Office

**EUROPEAN SEARCH REPORT**

Application Number

EP 06 00 4362

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 090 980 A (PROCTER & GAMBLE) 11 April 2001 (2001-04-11) * examples 1,2 * ----- | 1,2,4,5 | INV. C02F5/10 C11D17/00 |
| X | WO 00/70008 A (HOEFLINGER WILFRIED ;SANDMANN BRIGITTE (DE); GERET LAURENCE (DE);) 23 November 2000 (2000-11-23) * examples 1,2,8 * ----- | 1-5 | ADD. C02F1/68 C02F5/14 |
| A | EP 1 099 751 A (SMITHS INDUSTRIES PLC) 16 May 2001 (2001-05-16) * claims 1,4; figure 1 * ----- | 1 | |
| A | EP 0 812 808 A (CLEANTABS AS) 17 December 1997 (1997-12-17) * the whole document * ----- | 1 | |
| X,P | WO 01/98448 A (RECKITT BENCKISER N.V; RECKITT BENCKISER LIMITED; KOSUB, MIKE; CASONA) 27 December 2001 (2001-12-27) Table at page 10 * page 9, line 25 - page 10, line 6 * ----- | 1 | TECHNICAL FIELDS SEARCHED (IPC) |
| A | WO 01/59057 A (RECKITT BENCKISER N.V; ROBINSON, PAUL; WAESCHENBACH, GUIDO; COLLINS, B) 16 August 2001 (2001-08-16) ----- | 1 | C02F C11D |

The present search report has been drawn up for all claims

| Place of search | Date of completion of the search | Examiner |
|---|---|---|
| Munich | 26 April 2006 | Borello, E |

EPO FORM 1503 03.82 (P04C01)

**EP 1 681 273 A1**

ANNEX TO THE EUROPEAN SEARCH REPORT
ON EUROPEAN PATENT APPLICATION NO.                    EP 06 00 4362

This annex lists the patent family members relating to the patent documents cited in the above-mentioned European search report.
The members are as contained in the European Patent Office EDP file on
The European Patent Office is in no way liable for these particulars which are merely given for the purpose of information.

26-04-2006

| Patent document cited in search report | | Publication date | Patent family member(s) | | Publication date |
|---|---|---|---|---|---|
| EP 1090980 | A | 11-04-2001 | NONE | | |
| WO 0070008 | A | 23-11-2000 | AT | 256174 T | 15-12-2003 |
| | | | AU | 768494 B2 | 11-12-2003 |
| | | | AU | 4757900 A | 05-12-2000 |
| | | | CA | 2372193 A1 | 23-11-2000 |
| | | | DE | 19922578 A1 | 23-11-2000 |
| | | | EP | 1179042 A1 | 13-02-2002 |
| | | | ES | 2211543 T3 | 16-07-2004 |
| | | | US | 2002147125 A1 | 10-10-2002 |
| EP 1099751 | A | 16-05-2001 | GB | 2357295 A | 20-06-2001 |
| | | | JP | 2001191064 A | 17-07-2001 |
| EP 0812808 | A | 17-12-1997 | DE | 69724336 D1 | 02-10-2003 |
| | | | DE | 69724336 T2 | 19-02-2004 |
| | | | DK | 65596 A | 13-12-1997 |
| | | | DK | 0812808 T3 | 22-12-2003 |
| | | | ES | 2203777 T3 | 16-04-2004 |
| WO 0198448 | A | 27-12-2001 | AT | 256175 T | 15-12-2003 |
| | | | AU | 781421 B2 | 19-05-2005 |
| | | | AU | 6615101 A | 02-01-2002 |
| | | | BR | 0111739 A | 01-07-2003 |
| | | | CA | 2411279 A1 | 27-12-2001 |
| | | | CN | 1436230 A | 13-08-2003 |
| | | | DE | 60101482 D1 | 22-01-2004 |
| | | | DE | 60101482 T2 | 09-06-2004 |
| | | | EP | 1292663 A1 | 19-03-2003 |
| | | | ES | 2211812 T3 | 16-07-2004 |
| | | | MX | PA02012280 A | 06-06-2003 |
| | | | PL | 359069 A1 | 23-08-2004 |
| | | | US | 2003119707 A1 | 26-06-2003 |
| | | | ZA | 200300441 A | 02-04-2004 |
| WO 0159057 | A | 16-08-2001 | AU | 3203801 A | 20-08-2001 |
| | | | DE | 10005576 A1 | 23-08-2001 |
| | | | GB | 2361242 A | 17-10-2001 |

EPO FORM P0459

For more details about this annex : see Official Journal of the European Patent Office, No. 12/82

6